**Europäisches Patentamt**

**European Patent Office**

**Office européen des brevets**

(19)

(11) Veröffentlichungsnummer: **0 255 627**
A2

# EUROPÄISCHE PATENTANMELDUNG

(12)

(21) Anmeldenummer: 87110239.8

(22) Anmeldetag: 15.07.87

(51) Int. Cl.⁴: **G 06 F 15/62**

(30) Priorität: **04.08.86 HU 336186**

(43) Veröffentlichungstag der Anmeldung: **10.02.88 Patentblatt 88/6**

(84) Benannte Vertragsstaaten: **AT BE CH DE ES FR GB GR IT LI LU NL SE**

(71) Anmelder: **MTA Müszaki Kémiai Kutato Intézet, Postfach 125, H-8201 Veszprém (HU)**

(72) Erfinder: **Virag, Tibor, Dr. Dipl.-Phys., Lidérc u. 40-42, H-1121 Budapest (HU)**
Erfinder: **Jozsa Timko, Judit, Dr. Dipl.-Ing., Ervin u. 7, Budapest (HU)**
Erfinder: **Borlai, Oszkar, Dipl.-Chem., Törökvész u. 12/a, H-1021 Budapest (HU)**

(74) Vertreter: **Patentanwälte Viering & Jentschura, Steinsdorfstrasse 6, D-8000 München 22 (DE)**

(54) Verfahren und Einrichtung zur Bestimmung und Auswertung der Charakteristika multidimensionaler disperser Systeme in einer erwünschten Dimension.

(57) Die Erfindung betrifft ein Verfahren zur Bestimmung und Auswertung der räumlichen Charakteristika multidimensionaler disperser Systeme in erwünschter Dimension durch Anfertigen eines räumlichen Bildes des multidimensionalen, dispersen Systems in erwünschter Dimension, gegebenenfalls dessen Wiederherstellung sowie Darstellung auf dem Bildschirm durch Begehen der Punkte der zusammenhängenden Figuren, die das disperse System am Bild darstellen und gegebenenfalls durch Registrieren und Auswerten der Daten der Punkte. Parallel mit dem im Raum mit erwünschter Dimension befindlichen Bild werden räumliche Hilfsbilder (ein Hilfsbild) derselben Dimensionszahl entwickelt und durch Begehen der Punkte des räumlichen Bildes erwünchter Dimension wird jede zusammenhängende Figur des multidimensionalen Systems vollkommen rekonstruiert, wobei von einem Punkt ausgegangen wird und dann dessen Nachbarschaftspunkte in Richtung zum Inneren der zusammenhängenden Figur weitergegangen wird. Schliesslich werden deren Nachbarschaftspunkte derselben Eigenschaft begangen, und zwar einer nach dem anderen oder parallel, der Punkt bzw. die Punkte auf das Hilfsbild(er) kopiert, so dass dieses von den übrigen zusammenhängenden Figuren separiert wird, während gegebenenfalls die begangenen Punkte – die in ihrer Gesamtheit die zusammenhängende Figur bilden – gleichzeitig vom Bild gestrichen werden und gegebenenfalls das Verfahren mit einer weiteren zusammenhängenden Figur fortgesetzt wird. Das Hilfsbild (die Hilfsbilder) kann (bzw. können) dabei in einer mit dem Bild identischen Form entwickelt werden oder das Bild und/oder Hilfsbild (die Hilfsbilder) kann (bzw. können) einmal oder öfter invertiert werden.

### Verfahren und Einrichtung zur Bestimmung und Auswertung der Charakteristika multidimensionaler disperser Systeme in einer erwünschten Dimension

Gegenstand der Erfindung ist ein Verfahren zur Bestimmung und Auswertung der Charakteristika multidimensionaler disperser Systeme in einer erwünschten Dimension durch Anfertigung eines Bildes in einer gewünschten Dimension von den multidimensionalen dispersen Systemen, notfalls dessen Wiederherstellung und Darstellung mittels Begehens der Bildpunkte der einzelnen Figuren sowie der Registrierung und Auswertung derer Daten.

Gegenstand der Erfindung ist weiterhin eine Einrichtung zur Ausführung des Verfahrens, welche über Organe und Mittel zur Herstellung des Bildes (der Bilder) und des Begehens der Punkte der einzelnen Figuren des Bildes (der Bilder), der Registrierung und der Auswertung der Punktedaten besitzt.

Das Verfahren und die Einrichtung dienen der Bestimmung der Struktur und der physikalischen Charakteristika disperser Systeme: der Abmessungen, der Größenverteilung, der Form, Porosität, Geschwindigkeit, Geschwindigkeitsverteilung usw. der dispersen Teile.

Als disperses System bezeichnet man eine in irgendeiner Phase fein verteilte andere Phase oder Phasen. Das Bild oder der Schnitt eines dreidimensionalen räumlichen dispersen Sysstems kann zweidimensional sein. Mathematisch können Zeit und Geschwindigkeit betrachtet werden. Unter Berücksichtigung der Tatsache, daß der Geschwindigkeitsvektor über drei Komponenten verfügen kann, kann man im Falle eines im Raum bewegten dispersen Systems über ein System von mehr als drei Dimensionen sprechen. Das disperse System kann auch ein lebendiges System sein, z.B. eine Zelle, eine Bakterienkultur usw.. Als disperses System kann auch ein Bild, eine Abbildung, ein Text usw. betrachtet werden.

Die einfachste mengenmäßige Charakteristik eines dispersen Systems ist z.B. die Anzahl der Teile in einem Haufen, eine komplexere Chrakteristik ist z.B. die Anzahl der zu einem gegebenen Größenbereich gehörenden Teilchen, deren Masse, Oberfläche oder die Korngrößenverteilung des Haufens. In diesem Fall tritt bei der Bestimmung der Größenverteilung die Bestimmung der unterschiedlich interpretierten Größe oder des Formfaktors der Teilchen von komplizierter Form als eine separate Aufgabe auf.

Eine weitere Gruppe bildet die Bestimmung der topologischen Charakteristika, z.B. ob ein gegebenes Korn löchrig ist, welches die kontinuierliche Phase ist, ob sich zwei Figuren miteinander verketten usw.

Zur Bestimmung obiger Charakteristika wurden auf verschiedenen Prinzipien beruhende Kornanalysier-Einrichtungen entwickelt. Solche bekannten Einrichtungen sind z.B. die Sedimentometer usw., von denen die neuesten Ausführungen meist mit Rechnern verbundene opto-elektronische Kornanalysierer sind, z.B. die unter den Handelsnamen Classimat oder Vidimat bekannten Einrichtungen. Diese verarbeiten im allgemeinen das zweidimensionale Bild einer Fernsehkamera. Gemäß der Behauptung der Hersteller sind diese dazu geeignet, die auf dem Bild die Körner darstellenden Figuren zu zählen, die Zahl der auf die Körner (Figuren) entfallenden Rasterpunkte und die Zahl der auf die Körner (Figuren) entfallenden Sehnen gegebener Richtung zu bestimmen bzw. die Abmessungen des Bildes der Körner (Figuren) auf ein gegebenes Maß zu vermindern (Erosion). Die Korngrößenverteilung und die Charakteristika bezüglich der Form der Körner können aus den durch Kombination obiger Verfahren erhaltenen Resultaten berechnet werden. Alle diese Verfahren und Einrichtungen verarbeiten das Bild oder dessen designierten Teil reihenweise, in ihrer Gesamtheit unabhängig von der Zahl der darauf befindlichen Körner (Figuren). Diese reihenweise Verarbeitung bedeutet, daß nach Abtasten eines in die betreffende Reihe gehörenden Teiles eines Kornes (einer Figur) der in die betreffende Reihe gehörende Teil eines anderen Kornes (Figur) abgetastet wird und so weiter. Sodann folgt dasselbe in den folgenden Reihen.

Ein auf der zweidimensionalen Auswertung von Hologrammen, d.h. dreidimensionalen Bildern beruhendes Verfahren wird in der Patentschrift Nr. 175.498 beschrieben, wonach das Hologramm mit dem üblichen Laserstrahl aufgenommen, sodann wiederhergestellt und gemäß Ebenen ausgewertet wird.

Die Verfahren zur Bestimmung der Kornanzahl (Zweipunkt-Abtasten, Vierpunkt-Abtasten) sind im Fall konkaver bzw. mehrfach zusammenhängender Figuren sehr unsicher, da diese Systeme das Abtasten reihenweise vornehmen, und ein Korn von komplizierter Form in derselben horizontalen Reihe sogar öfters erscheinen kann. Im Laufe der Erosion kommt es vor, daß die Körner komplizierter Form reißen, so daß die mit dieser Methode erhaltenen Korngrößen-Verteilungskurven oft unbrauchbar sind. Fehler können auch dadurch auftreten, daß am zweidimensionalen Bild Körner, die sich vor oder hinter der Bildebene befinden, mit dem Korn (den Körnern) in der Bildebene verschmelzen, wodurch sich die gemessene Kornanzahl vermindert und die gemessenen Abmessungen größer werden.

Zielsetzung der Erfindung war die Ausarbeitung eines Verfahrens und einer dessen Verwirklichung ermöglichenden Einrichtung, welches die angeführten Män-

**0 255 627**

gel beseitigt, und die Möglichkeit bietet, z.B. unter Berücksichtigung auch der Geschwindigkeitsvektoren und der Zeit die Struktur multidimensionaler zusammenhängender Formen und deren physikalische Charakteristika zu bestimmen und auszuwerten.

Die Entwicklung des erfindungsgemäßen Verfahrens und der Einrichtung beruht auf der Erkenntnis, daß bei einem multidimensionalen System durch Darstellung eines Bildes und parallel damit bereits eines einzigen Hilfsbildes mittels die Punkthaufen des Bildes bzw. Hilfsbildes betreffenden Operationen: Umrahmen, Invertieren, Bilden des gemeinsamen Teiles usw. die Möglichkeit besteht, die zusammenhängenden Figuren des Bildes einzeln (je nach Figur) zu begehen, d.h. zu trennen, bzw. die topologischen und geometrischen Charakteristika einzeln zu bestimmen, unabhängig von der Anzahl der Dimensionen des Raumes, von der Komplexheit der Figuren bzw. von der Zahl der am Bild vorhandenen zusammenhängenden Figuren.

Das den Gegenstand der Erfindung bildende Verfahren und die Einrichtung beruht auf der Erkenntnis, daß das Abtasten, d.h. das Begehen im Inneren der zusammenhängenden Figuren von Punkt zu Punkt fortschreitend durchzuführen ist, die bereits berührten Punkte auf die Hilfsbilder kopiert und gleichzeitig vom Bild gestrichen werden können, um anzuzeigen, daß deren Auswertung bereits geschehen ist. Das Bild wird also nicht zeilenweise, von einer Figur in die andere fortschreitend abgetastet, sondern man bleibt solange innerhalb einer Figur, bis deren Begehen abgeschlossen ist. Dann geht man zu einer anderen Figur über.

Das erfindungsgemäße Verfahren und die Einrichtung beruht des weiteren auf der Erkenntnis, daß das Fortfahren von Punkt zu Punkt durch Umrahmen zu verwirklichen ist. Unter Umrahmen versteht man hier jene Operation, mit welcher zu den auf einem Bild vorhandenen Figuren sämtliche Nachbarschaftspunkte im Raum von erwünschter Dimension hinzugenommen werden, wobei die Nachbarschaftsrelation je nach Aufgabenstellung bestimmt wird. Durch Anwendung dieses Verfahrens kann - unserer Erkenntnis nach - das Begehen der zusammenhängenden Figuren des Bildes folgendermaßen verwirklicht werden: erst nimmt man einen Punkt einer beliebigen zusammenhängenden Figur des Bildes, dieser wird auf das Hilfsbild (die Hilfsbilder) kopiert und gleichzeitig vom Bild gestrichen, sodann wird der auf das Hilfsbild (Hilfsbilder) kopierte Teil der zusammenhängenden Figuren in obigem Sinne umrahmt und der gemeinsame - also zu der zusammenhängenden Figur gehörende - Teil der Punkthaufen des Bildes und des Hilfsbildes (der Hilfsbilder) zu dem auf dem Hilfsbild (den Hilfsbildern) bereits vorhandenen Teil kopiert und vom Bild gestrichen. Diese Operationsreihe wird

4

0 255 627

solange wiederholt, als der gemeinsame Teil der Punkthaufen des Bildes und des Hilfsbildes (der Hilfsbilder) leer wird, also bis die ganze zusammenhänge Figur begangen ist. Das Verfahren wird fortgesetzt durch das Suchen eines Punktes einer weiteren zusammenhängenden Figur, bzw. wird beendet, wenn es keinen solchen mehr gibt.

Das Wesen des erfindungsgemäßen Verfahrens ist also, daß parallel mit dem Bild erwünschter Dimension ein Hilfsbild (Hilfsbilder) der gleichen Dimension entwickelt wird, und die Punkte am Bild erwünschter Dimension jeder zusammenhängenden Figur des multidimensionalen Systems begangen werden, dabei wird von einem Punkt ausgegangen und dann zu den in das Innere der zusammenhängenden Figur fallenden Nachbarschaftspunkten weitergegangen, dann zu deren Nachbarschaftspunkten ähnlicher Eigenschaft, und so weiter, nacheinander, oder parallel, bis schließlich diese Figur durch Kopieren auf die Hilfsbilder rekonstruiert ist und auf diese Weise von den übrigen zusammenhänden Figuren getrennt ist, während im gegebenen Fall die berührten Punkte der zusammenhängenden Figur in ihrer Gesamtheit gleichzeitig vom Bild gestrichen werden und gegebenenfalls das Verfahren mit einer folgenden zusammenhängenden Figur fortgesetzt wird.

Gemäß einer Ausführungsmethode des Verfahrens laut Erfindung wird das Bild und/oder das Hilfsbild (die Hilfsbilder)n in derselben Form wie das Bild entwickelt.

Gemäß einer anderen Ausführungsmethode des Verfahrens laut Erfindung wird das Bild und/oder das Hilfsbild (die Hilfsbilder) einmal oder öfter invertiert.

Gemäß einer vorteilhaften Ausführungsmethode des erfindungsgemäßen Verfahrens wird das Begehen der zusammenhängenden Figur des multidimensionalen dispersen Systems von einem Punkt ihres Bildes aus gestartet, der zumindest auf ein Hilfsbild kopiert wird. Gleichzeitig wird der auf dem Hilfsbild (den Hilfsbildern) vorhandene Teil der zusammenhängenden Figur - im ersten Schritt der Punkt, später dann der bereits kopierte Teil der zusammenhängenden Figur - gestrichen, im Raum in einer erwünschten Dimension umrahmt, d.h. auf das Hilfsbild im Raum der erwünschter Dimension würden je nach Aufgabenstellung sämtliche Punkte der Nachbarschaftsrelation hinzugenommen und dann werden die gemeinsamen Punkthaufen des Bildes und des Hilfsbildes, also der zu der zusammenhängenden Figur gehörende Teil auf das Hilfsbild kopiert und vom Bild gestrichen, wobei die Operationsreihe solange wiederholt wird bis der gemeinsame Punkthaufenteil des Bildes und Hilfsbildes leer wird.

Gemäß einer Ausführungsmethode des erfindungsgemäßen Verfahrens werden die am Bild vorhandenen Punke beliebiger zusammenhängender Figur des multidimensionalen dispersen Systems nacheinander oder parallel begangen und deren Daten auf bekannte Weise registriert und gegebenenfalls auf bekannte Weise ausgewertet.

Gemäß einer anderen Ausführungsmethode des erfindungsgemäßen Verfahrens werden über das binäre Zeichensystem beliebiger zusammenhängender Figur des multidimensionalen dispersen Systems die Punkte nacheinander oder parallel begangen, in das binäre Hilfs-Zeichensystem kopiert und zwar auf den mit dem ursprünglichen binären Zeichensystem identischen Speicherbereich.

Laut einer anderen Ausführungsmethode des erfindungsgemäßen Verfahrens wird das Bild und/oder das Hilfsbild (Hilfsbilder) einmal oder mehrmals invertiert.

Nach einer wieder anderen Ausführungsmethode des erfindungsgemäßen Verfahrens werden die einzelnen zusammenhängenden Figuren des Bildes des multidimensionalen dispersen Systems in verschiedene Hilfsbilder kopiert.

Laut einer günstigen Ausführungsmethode des erfindungsgemäßen Verfahrens werden die zusammenhängenden Figuren des Bildes eines multidimensionalen dispersen Systems parallel miteinander begangen.

Laut einer anderen vorteilhaften Ausführungsmethode des erfindungsgemäßen Verfahrens wird das binäre Zeichensystem bit-weise oder nach größeren Einheiten parallel begangen.

Das Wesen der erfindungsgemäßen Einrichtung ist also, daß diese zur Anfertigung und/oder Wiederherstellung und/oder Aufnahme eines multidimensionalen Bildes sowie zur Entwicklung des Hilfsbildes (der Hilfsbilder) dienende Organe besitzt, des weiteren über Mittel verfügt, die ein Begehen der zusammenhängenden Figuren des Bildes des multidimensionalen Systems gestatten und zwar derart, daß von einem Punkt ausgegangen wird und von diesem aus nacheinander oder parallel zu den Nachbarschftspunkten weitergegangen wird, um ein Kopieren der begangenen Punkte auf das Hilfsbild (Hilfsbilder) und gegebenenfalls ein Streichen derselben vom Bild zu erreichen.

Eine Ausführungsform der erfindungsgemäßen Einrichtung besitzt Mittel zum Invertieren des Bildes und/oder des Hilfsbildes (der Hilfsbilder).

Eine vorteilhafte Ausführungsform der erfindungsgemäßen Einrichtung besitzt Mittel zum Umrahmen des Figurenteils des Hilfsbildes (der Hilfsbilder) und zum Bilden des gemeinsamen Teils (der Teile) des Bildes und des Hilfsbildes (der Hilfsbilder), zum Kopieren auf das Hilfsbild (Hilfsbilder) sowie gegebenenfalls zum Streichen vom Bild.

Eine weitere Ausführungsform der erfindungsgemäßen Einrichtung besitzt Organe zum Registrieren der Daten der begangenen Punkte auf bekannte Weise und gegebenenfalls zum Auswerten derselben auf bekannte Weise.

Eine andere Ausführungsform der erfindungsgemäßen Einrichtung besitzt Mittel zum Kopieren der einzelnen zusammenhängenden Figuren des Bildes eines multidimensionalen Systems auf verschiedene Hilfsbilder.

Eine andere Ausführungsform der erfindungsgemäßen Einrichtung besitzt Mittel zum parallelen Begehen der einzelnen zusammenhängenden Figuren des Bildes eines multidimensionalen dispersen Systems.

Die Anwendung des erfindungsgemäßen Verfahrens wird anhand von Beispielen beschrieben, deren Ausführungsformen aus der Zeichnung ersichtlich sind.

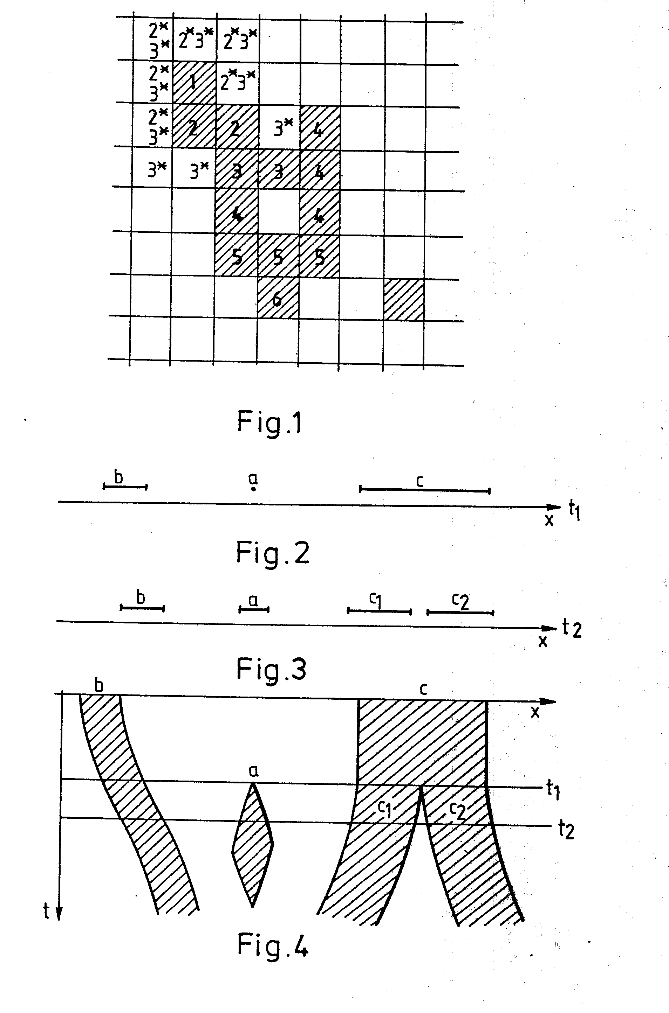

*1. Beispiel*　Aus Abbildung 1 ist die Bestimmung zweier aus 13 Punkten bestehenden zusammenhängenden zweidimensionalen Figuren ersichtlich, aber sinngemäß geschieht auch die Bestimmung von multidimensionalen Figuren auf ähnliche Weise, da auch Figuren von mehr als drei Dimensionen vorkommen können. Z.B. können in einem physikalisch eindimensionalen System zu einem gegebenen Zeitpunkt $t$ Punkte (a) und Abschnitte (b, c) auftreten (Abb. 2). Diese können sich bewegen, aneinander haften, sich trennen. Die Lage im Moment $t$ ist aus Abbildung 3 ersichtlich. Aus dem Vergleich von Abbildung 1 und 2 ist zu ersehen, daß der Punkt (a) zu einem Abschnitt erweitert wurde, der Abschnitt (b) sich nach rechts bewegt hat, der Abschnitt (c) sich in zwei Teile (c, c) getrennt hat. Die bis zum Zeitpunkt $t$ nacheinander auftretenden Lagen können auf einer einzigen zweidimensionalen Abbildung (Abb. 4) in einem Länge-Zeit-Koordinatensystem dargestellt werden.

Auf die Bewegung, Trennung, Zusammenhaftung der eindimensionalen Figuren kann man aus der Analyse d der zweidimensionalen Figuren folgern. Allgemein kann gesagt werden, daß die Analyse der geometrischen Eigenschaften in Bewegung befindlicher, sich verändernder Figuren in einem solchen (durch Vereinigung der Ort- und Zeit-Koordinaten entstehenden) Raum möglich ist, der um eine Dimension mehr hat als der ursprüngliche Raum. Ähnlicherweise kann es vorteilhaft sein, bei der Charakterisierung des Bewegungszustandes der bewegten Figuren, einen die Impuls- und Ortskoordinaten vereinigenden sogenannten Phasenraum zu verwenden, dessen Anzahl von Dimensionen das Doppelte jener der ursprünglichen Figur beträgt (z.B. im Falle einer räumlichen, dreidimensionalen Figur wird die Analyse in solchen Fällen in einem sechsdimensionalen Phasenraum durchgeführt).

Bei der Bearbeitung der aus Abbildung 1 ersichtlichen Konfiguration werden auf eine an sich bekannte Art die Punkte der Reihe nach begangen und von jedem festgestellt, ob er in irgendeine Figur hineinfällt oder nicht, dies wird solange fortgesetzt, bis Punkte gefunden sind, welche nicht in eine Figur z.B. in die aus 13 Punkten bestehende Figur laut Abbildung hineingehören. Das ist zum Beispiel der Punkt 1. Danach werden ein oder mehrere leere, oder bloß die betreffende Figur nicht enthaltende Hilfsbilder in derselben Form wie das Bild der Figur in Abbildung 1 entwickelt. Punkt 1 wird in ein oder mehrere Hilfsbilder kopiert. Auf den Hilfsbildern wird der dorthin kopierte Punkt 1 umrahmt. Unter Umrahmung einer Figur wird verstanden, daß eine solche neuere Figur entwickelt wird, welche aus den ursprünglichen Punkten der Figur und aus sämtlichen Nachbarschaftspunkten derselben besteht. Im Sinne dieser Festlegung wird Punkt 1 gemeinsam mit allen Nachbarschaftspunkten mit Zeichen 2 als eine einzige Figur angesehen.

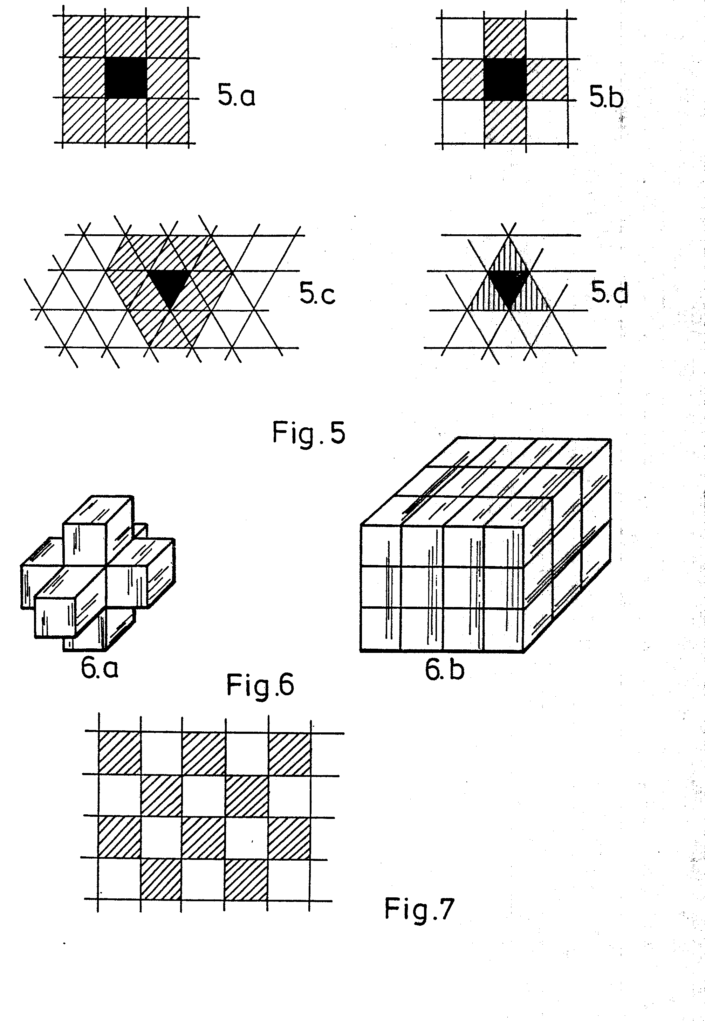

Die Wahl der Nachbarschaftspunkte wird immer dem Zweck entsprechend ausgeführt, es können nämlich auf verschiedene Weisen Punkte als Nachbarschaftspunkte eines gegebenen Punktes angesehen werden. Aus Abbildung 5 sind in einem zweidimensionalen Raum einige Möglichkeiten zur Wahl der Nachbarschaftspunkte ersichtlich. Abbildung 5a und 5b zeigen je zwei Möglichkeiten bei einer ebenen Quadratgitteranordnung, Abbildung 5c und 5d bei einer ebenen Sechseckgitteranordnung. Aus Abbildung 6 ist im Fall eines räumlichen Gitters (Würfelgitter) die Möglichkeit der Wahl zweier Nachbarschaftspunkte ersichtlich. Wie ersichtlich, kann die Zahl der Nachbarschaftspunkte gemäß der gewählten Methode sehr unterschiedlich sein Er kann sich sogar bei einer Auswahlmethode der Nachbarschaftspunkte die Anzahl von Punkt zu Punkt ändern (der Punkt in der Ecke der Abbildung hat z.B. weniger Nachbarschaftspunkte als einer in der Mitte der Abbildung).

Die Anzahl und Art der erhaltenen zusammenhängenden Figuren hängt in hohem Maße von der Wahlmethode der Nachbarschaftspunkte ab. Die Figur aus Abbildung 7 z.B. ist gemäß der Nachbarwahlmethode laut Abbildung 5a eine einzige, aus 10 Punkte bestehende zusammenhängende Figur, jedoch laut Abbildung 5b sind es zehn zusammenhängende Figuren, die jeweils aus einem Punkt bestehen.

Dem erfindungsgemäßen Verfahren entsprechend werden nach dem auf übliche Weise vorgenommenen Umrahmen die nicht in die Figur fallenden Nachbarschaftspunkte (2) vom Hilfsbild (den Hilfsbildern) gestrichen und nur jene, die in der ursprünglichen Figur enthalten sind (2), d.h. die gemeinsamen Teile der beiden Bilder, beibehalten.

Das erfindungsgemäße Verfahren wird durch das Umrahmen der auf dem Hilfsbild (den Hilfsbildern) befindlichen (aus Punkten mit Zeichen 1 und 2 bestehenden) Figuren fortgesetzt, d.h. die Nachbarschaftspunkte mit Zeichen 3 und 4 werden hinzugenommen, sodann werden aus der neuen Figur die mit 3 bezeichneten, d.h. all jene gestrichen, die in der Ausgangsfigur nicht enthalten sind. Obiges Verfahren wird solange fortgesetzt, bis es unter den zu der am Hilfsbild (auf den Hilfsbildern) befindlichen Figur durch Umrahmen hinzugenommenen Punkten (n + n) solche gibt, die in der Figur vorhanden sind (n).

Gemäß dem erfindungsgemäßen Verfahrens können von jeder einzelnen Figur die charakteristischen Abmessungen (Durchmesser, größtes Maß usw.) festgestellt werden, welches durch die Anzahl der notwendigen Umrahmungen angegeben wird, nämlich die Oberfläche (die Zahl der in die Figur fallenden Punkte), die Änderung der Zahl der in die Figur fallenden Punkte in Abhängigkeit von der Zahl der Umrahmungsschritte (eine Menge, die mit der Fraktaldimensionen der Figur zusammenhängt), die Koordinaten des Schwerpunktes der Figur usw.

In dem Beispiel wurden die notwendigen Operationen an den einzelnen Bildpunkten des Bildes und des Hilfsbildes (der Hilfsbilder) nacheinander, reihenweise durchgeführt, z.B. wurden die Nachbarschaftspunkte der einzelnen Punkte nacheinander beim Umrahmen gesucht.

Nach Abschluß des Begehens der aus 13 Punkten bestehenden Figur laut Abbildung 1 werden die Punkte noch einmal an die Reihe genommen, bis von keinem festgestellt wird, daß dieser in eine bisher nicht gefundene Figur des Bildes fällt. Dann wird das Verfahren wiederholt, nämlich Kopieren auf das Hilfsbild bzw. Umrahmen wie vorhin beschrieben.

Nach Auswertung von Abbildung 1 mit der erfindungsgemäßen Methode erhält man die Resultate laut Tabelle 1.

Tabelle 1

| laufende Nummer der gefundenen Körner | Durchmesser | Oberfläche |
|---|---|---|
| 1. | 6 | 13 |
| 2. | 1 | 1 |

Bei dem bekannten Verfahren mit den Einrichtungen der Firma Leitz (Classimat) oder der Firma Hamamatsu wird die Anzahl der Körner durch die Differenz zwischen der in sämtliche Abtastreihen fallenden Sehnenanzahl am Bild und der Sehnenanzahl auf jenem Bild, das durch Bildung des gemeinsamen Teiles benachbarter Reihen entwickelt wurde, bestimmt. Durch Verschiebung des Bildes in Richtung der Reihe um eine gegebene Länge und Bildung eines weiteren gemeinsamen Teiles erhält man das Bild, welches nur solche Körner enthält, deren Abmessung in Richtung der Reihe größer ist als das Maß der Verschiebung. Durch neueres Abzählen erhält man die Korngrößenverteilung.

Die Auswertung der Figuren auf Abbildung 1 nach obiger Methode ergibt die Resultate laut Tabelle 2.

Tabelle 2

| Korngröße | 0 | 1 | 2 | 3 | 4 |
|---|---|---|---|---|---|
| Kornanzahl | 1 | 2 | 1 | 2 | 0 |

Die bekannten Methoden liefern vor allem in jenem Fall fehlerhafte, unbrauchbare Resultate, wie die obigen, wenn die untersuchten Figuren nicht einfach zusammenhängend, nicht konvex sind oder verhältnismäßig dicht liegen. Einen bedeutenden Fehler verursacht die Tatsache, daß selbst bei geringem Eigengeräusch ein bedeutender Teil der ansonsten gut abzählbaren Körner ebenfalls in obige, hinsichtlich der Methode in eine Klasse mit ungünstigen Eigenschaften gelangen kann.

Das Kriterium des Zusammenhanges, jene Eigenschaft des Kornes, die im erfindungsgemäßen Verfahren ausgenützt wurde, hängt weniger vom Eigengeräusch des Systems ab. Fehler können weiterhin auch dadurch vermieden werden, daß auf dem Hilfsbild (den Hilfsbildern) die einzelnen Figuren getrennt erscheinen, so daß diese auch nach weiteren Gesichtspunkten klassifiziert werden (z.B. einfach oder mehrfach zusammenhängend usw.) können.

Beispiel 2   Ein Punkt des Diabildes auf Abbildung 1 wird auf ein Hilfsbild(er) kopiert, das so erhaltene Hilfsbild invertiert, sodann mit einer nicht punktartigen Lichtquelle beleuchtet und auf eine Oberfläche (n), d.h. auf ein leeres Hilfsbild(er) projiziert. Die Form der Lichtquelle wird den Nachbarschaftsrelationen entsprechend gewählt. Das auf dem Hilfsbild (den Hilfsbildern) erscheinende Bild enthält so die Inverse des umrahmten Teiles der projizierten Figur(en). Von obigem Beispiel abweichend wird so die Umrahmung nicht durch Begehen der Punkte des Hilfsbildes, sondern parallel durchgeführt. Die auf dem Hilfsbild(ern) auf diese Weise projizierte umrahmte Figur wird gemäß dem erfindungsgemäßen Verfahren mit bekannten optischen bzw. opto-elektronischen Methoden mit dem ursprünglichen Bild kombiniert (Bildung des gemeinsamen Teiles, Kopieren, Streichen usw.), und das Verfahren wird solange wiederholt, bis nicht ähnlich wie in Beispiel 1 sämtliche zusammenhängende Figuren des Bildes begangen sind.

Beispiel 3   Auf die von Abbildung 1 bekannte Weise wird in einem binären Zeichensystem eine bit-Karte angefertigt, die - wie in Beispiel 1 beschrieben - reihenweise oder parallel begangen wird. Wird ein zu irgendeiner Figur gehörender Punkt gefunden, so wird dieser mit der in der Rechentechnik bekannten Weise in die Hilfs-Bit-Karte(n) kopiert, auf bekannte Weise umrahmt, und so weiter, bis zum Abschluß der Auswertung gemäß Beispiel 1. Die Daten der Punkte der einzelnen Figuren werden auf bekannte Weise registriert und gegebenenfalls auf bekannte Weise ausgewertet. Gleichzeitig mit der Bestimmung des gemeinsamen Teiles des Bildes und Hilfsbildes(er) wird der gemeinsame Teil vom Bild gestrichen.

_Beispiel 4_    Aus dem Hologramm der Abbildung 1 wird die Abbildung 1 wiederhergestellt, dann entsprechend Beispiel 1 oder 2 verfahren, wobei aber die einzelnen Figuren auf separaten Hilfsbildern angebracht werden.

## PATENTANSPRÜCHE

1. Verfahren zur Bestimmung und Auswertung der räumlichen Charakteristika multidimensionaler disperser Systeme in einer erwünschten Dimension durch Anfertigen eines räumlichen Bildes des multidimensionalen, dispersen Systems in einer erwünschten Dimension, gegebenenfalls dessen Wiederherstellung, sowie Darstellung auf dem Bildschirm durch Begehen der Punkte der zusammenhängenden Figuren, die das disperse System am Bild darstellen und gegebenenfalls durch Registrieren und Auswerten der Daten der Punkte, dadurch gekennzeichnet, daß parallel mit dem im Raum mit erwünschter Dimension befindlichen Bild räumliche Hilfsbilder (ein Hilfsbild) derselben Dimensionszahl entwickelt werden und durch Begehen der Punkte des räumlichen Bildes erwünschter Dimension jede zusammenhängende Figur des multidimensionalen Systems vollkommen rekonstruiert wird, wobei von einem Punkt ausgegangen wird und zu dessen Nachbarschaftspunkten in Richtung des Inneren der zusammenhängenden Figur weitergegangen wird und dann zu deren Nachbarschaftspunkten derselben Eigenschaft weitergegangen wird, wobei einer nach dem anderen oder parallel zueinander der Punkt bzw. Punkte auf das Hilfsbild(er) kopiert wird, so daß dieses von den übrigen zusammenhängenden Figuren separiert wird, während gegebenenfalls die begangenen Punkte, die in ihrer Gesamtheit die zusammenhängende Figur ergeben, gleichzeitig vom Bild gestrichen werden und gegebenenfalls das Verfahren mit einer weiteren zusammenhängenden Figur fortgesetzt wird.

2. Verfahren nach Anspruch 1, dadurch gekennzeichnet, daß das Hilfsbild (die Hilfsbilder) in einer mit dem Bild identischen Form entwickelt wird.

3. Verfahren nach Anspruch 1 und 2, dadurch gekennzeichnet, daß das Bild und/oder Hilfsbild (die Hilfsbilder) einmal oder öfter invertiert wird bzw. werden.

4. Verfahren nach einem der Ansprüche 1 bis 3, dadurch gekennzeichnet, daß das Begehen der zusammenhängenden Figur des multidimensionalen dispersen

Systems derart erfolgt, daß von einem Punkt ihres Bildes ausgegangen wird, dieser wenigstens in ein Hilfsbild kopiert wird, sowie gleichzeitig der auf dem Hilfsbild(ern) vorhandene Teil der zusammenhängenden Figur vom Bild gestrichen wird - im ersten Schritt den Punkt, im weiteren den bereits kopierten Teil der zusammenhängenden Figur - im Raum mit erwünschter Dimension eingerahmt wird, d.h. sämtliche Punkte, die je nach Aufgabenstellung in Nachbarschaftsrelation zueinander sind, auf das Hilfsbild im Raum mit erwünschter Dimension hinzugenommen werden, um dann den gemeinsamen, also den zu der zusammenhängenden Figur gehörenden Teil auf dem Hilfsbild auf den bereits dort vorhandenen Teil der zusammenhängenden Figur zu kopieren und vom Bild zu streichen, wobei die Operationsreihe solange wiederholt wird, bis der gemeinsame Teil des Bild-Punkthaufens und des Hilfsbild-Punkthaufens leer ist.

5. Verfahren nach einem der Ansprüche 1 bis 4, dadurch gekennzeichnet, daß die Punkte des Bildes einer beliebigen zusammenhängenden Figur eines multidimensionalen dispersen Systems hintereinander oder parallel begangen werden, wobei ihre Daten auf bekannte Weise registriert und gegebenenfalls auf bekannte Weise ausgewertet werden.

6. Verfahren nach einem der Ansprüche 1 bis 5, dadurch gekennzeichnet, daß im binären Zeichensystem jeder zusammenhängenden Figur des multidimensionalen dispersen Systems die Punkte nacheinander oder parallel begangen, diese in einem Hilfs-Binär-Zeichensystem auf einen Speicherbereich kopiert werden, der mit dem binären Zeichensystem identisch ist.

7. Verfahren nach einem der Ansprüche 1 bis 6, dadurch gekennzeichnet, daß einige zusammenhängende Figuren des multidimensionalen dispersen Systems auf verschiedene Hilfsbilder kopiert werden.

8. Verfahren nach einem der Ansprüche 1 bis 7, dadurch gekennzeichnet, daß die zusammenhängenden Figuren des Bildes des multidimensionalen Systems parallel miteinander begangen werden.

9. Verfahren nach einem der Ansprüche 1 bis 8, dadurch gekennzeichnet, daß das binäre Zeichensystem bit-weise oder größeren Einheiten nach parallel begangen wird.

10. Einrichtung zur Ausführung des Verfahrens nach einem der Ansprüche 1 bis 9, dadurch gekennzeichnet, daß die Einrichtung Organe zur Anfertigung von multidimensionalen Bildern und/oder zur Wiederherstellung und/oder Aufnahme derselben, sowie zum Entwickeln von Hilfsbildern sowie Mittel zum Begehen (hintereinander oder parallel) der zusammenhängenden Figuren des Bildes eines multidimensionalen Systems von einem Punkt zu den Nachbarschaftspunkten oder parallel, zum Kopieren der begangenen Punkte auf das Hilfsbild (die Hilfsbilder) und gegebenenfalls zum Streichen vom Bild besitzt.

11. Einrichtung nach Anspruch 10, dadurch gekennzeichnet, daß die Einrichtung das Bild und/oder das Hilfsbild(er) invertierende Mittel besitzt.

12. Einrichtung nach Anspruch 10 oder 11, dadurch gekennzeichnet, daß diese Mittel zum Umrahmen der Figurenteile auf dem Hilfsbild (den Hilfsbildern) sowie zum Entwickeln der gemeinsamen Teile des Bildes und des Hilfsbildes(er) sowie zum Kopieren auf das Hilfsbild(er) sowie gegebenenfalls zum Streichen vom Bild besitzt.

13. Einrichtung nach einem der Ansprüche 10 bis 12, dadurch gekennzeichnet, daß die Einrichtung Organe zum Registrieren der Daten der begangenen Punkte auf bekannte Weise besitzt und gegebenenfalls über Mittel zu deren Auswertung auf bekannte Weise verfügt.

14. Einrichtung nach einem der Ansprüche 10 bis 13, dadurch gekennzeichnet, daß die Einrichtung über Mittel zum Kopieren einzelner zusammenhängender Figuren des Bildes des multidimensionalen dispersen Systems auf die Hilfsbilder verfügt.

15. Einrichtung nach einem der Ansprüche 10 bis 14, dadurch gekennzeichnet, daß die Einrichtung Mittel zum parallelen Begehen einzelner zusammenhängender Formen des Bildes eines multidimensionalen dispersen Systems besitzt.

0 255 627

Fig.1

Fig.2

Fig.3

Fig.4

2/2

0 255 627

5.a

5.b

5.c

5.d

Fig.5

6.a

6.b

Fig.6

Fig.7